# EUROPEAN PATENT SPECIFICATION

(11) **EP 3 519 154 B1**
(45) Date of publication and mention of the grant of the patent: **07.12.2022**
(21) Application number: 16782199.0
(22) Date of filing: 03.10.2016
(51) Int. Cl.: B29C 44/06, B29C 44/12, B29C 44/24, B29C 44/32, B29C 70/50, B32B 5/20, B29K 75/00, B29L 9/00

(54) **A PROCESS FOR MAKING A FOAM BOARD**
VERFAHREN ZUR HERSTELLUNG EINER SCHAUMSTOFFPLATTE
PROCÉDÉ DE FABRICATION D'UNE PLAQUE EN MOUSSE

(43) Date of publication of application: 07.08.2019
(73) Proprietor: Kingspan Holdings (IRL) Limited, Kingscourt County Cavan (IE)
(72) Inventor: TÖLGYI, Stefan, 300133 Timisoara (RO)
(74) Representative: Tomkins & Co
(86) International application number: PCT/EP2016/073559
(87) International publication number: WO 2018/065030

(56) References cited:
- DE-A1-102009 049 298
- US-A- 3 167 603
- US-A- 3 711 581
- US-A- 4 438 166
- US-A- 4 764 420
- US-A- 5 093 175
- US-A- 5 698 302
- US-A1- 2015 096 664

## Description

### Field of the Invention

The present invention relates to a process for making a foam board.

### Background to the Invention

The invention relates to a process for making a foam board. In particular, it is desirable to make a foam board with an applied facing. It is desirable that the foam board is suitable for use in an external wall insulation system for thermally insulating an outside wall of a building.

In insulating a building it is known to provide an insulating layer that is attached to an outer surface of said wall. The insulating layer is thus external to the building. A finishing layer is applied to an outer surface of said insulating layer. The finishing layer can be a plaster material, or a render material. US 5698302 relates to a construction where there is a plastics sheet bonded to at least one glass fibre mat. US 5698302 discloses a configuration where the plastics sheet is between two glass fibre mats.

Such systems are known. A known system for instance comprises an insulating layer of for instance polystyrene or mineral wool that can be connected to an outer surface of an outside wall of a building, for example by means of dowels, anchors or adhesive. On an outer surface of the insulating layer a finishing layer is provided. The finishing layer may for instance comprise different plaster layers, optionally with reinforcing elements, or other suitable finishing layers (e.g. mineral or polymer based plasters). This external wall insulating system can for instance be used to thermally insulate existing buildings or newly built buildings. At the same time the system may prevent moisture or outer external influences from reaching the wall.

An issue that arises is to provide an external insulating layer that has sufficient structural integrity to withstand the tensile forces which will be applied to it once a finishing layer such as a plaster material or render material has been applied. Of course, being external to a building, it is desirable that the external insulating layer is weatherproof.

Therefore, the object of the invention is to provide a process for providing an improved external wall insulation system. More in particular, the object of the invention is to provide a simple yet efficient process for making an external wall insulation system that has sufficient structural integrity.

### Description of the Invention

In one aspect, the present invention provides a process for making a foam board comprising the steps of:
(i) laying down a lower facer of a plastics material, which has a fibrous face with partially unbound fibres formed by fibres that are in part bound to the lower facer and are in part unbound, so that the fibrous face faces upwards;
(ii) depositing a liquid adhesive material onto the fibrous face so as to wet the unbound part of fibres and eliminate air from between the partially unbound fibres;
(iii) depositing foam forming reactants over the adhesive material that is on the fibrous face; and
(iv) forming a foam body of a desired shape from the reactants,
wherein the adhesive material and the unbound part of the fibres are incorporated into the foam body so that the unbound part of the fibres provide mechanical fixation of the lower facer to the foam body thus forming a foam board comprising the foam body with the lower facer attached thereto. This process gives good mechanical adherence of the facer to the foam body and is suitable for use in external insulation to which a finishing material such as a render is directly applied and supported by the foam board. Air that is within the mass of the unbound fibres and that would otherwise cause air bubbles in the foam is substantially eliminated.

The foam board can be applied to an external wall of a building. The (lower) facer can be placed outwardly. A building finishing material, such as a plaster, or a render, can be applied directly to the facer. Because of the manner of construction of the foam board of the invention, the structural integrity (including attachment of the facer to the foam body) of the foam board is significant.

In particular, finishing materials which apply a substantial tensile force on the facer, will not separate the facer from the foam body.

Desirably the lower facer has a fibrous face with partially unbound fibres formed by fibres that are in part bound to the lower facer and are in part unbound, so that the fibrous face provides mechanical fixation of the lower facer to an applied finishing material such as a plaster or render.

The adherence of the facer to the foam body in accordance with a process of the invention is substantial. The adherence is by mechanical fixation and not merely chemical fixation. Accordingly, the tensile strength that results may be such that the core of the foam will fail under tensile strength testing before the facer separates from the core. For example the tensile strength which may be sustained before the facer separates from the core may be at least 80kPA, for example at least 90kPa, such as at least 100kPa.

Indeed, such tensile strength is observed even when a material, such as a plaster or render is applied to the facer. Again, the failure under tensile strength testing tends to occur in the core (foam body) of the insulating material rather than in separation of the facer from the core (foam body).

It will be appreciated that in a facer suitable for use in the invention, fibres may have one part or end bound or fixed within the facer and another free end which is unbound or free. Alternatively, both ends of the fibres may be bound and a middle part between the ends may be unbound. In any event, the unbound or free part of the fibres together form a loose or moveable mass or structure, for example a fleece structure.

It is desirable that the unbound part of the fibres form a fleece microstructure.

One of the issues that arises is that air can be trapped within the mass of the unbound parts of the fibres when the foam forming reactants are deposited.

Desirably the lower facer is formed of a polypropylene material with partially unbound polypropylene fibres formed by fibres that are in part bound to the lower facer and are in part unbound. These partially unbound polypropylene fibres are desirably on at least one face thereof.

It has been found that such materials provide good structural integrity, provide a good foundation for the later application of a finishing material such as a render or a plaster, yet can also provide weather proofing.

Desirably the lower facer comprises at least one layer that is permeable to water vapour but not liquid water. In this way, the layer becomes breathable. It lets through water vapour but not moisture. Accordingly, it provides a weatherproof (waterproof) breathable barrier.

Desirably the lower facer comprises at least one anti-condensation layer. In this way, when in end-use, on the exterior of a building, there is no condensation of water on the panel.

The lower facer may be formed from a non-woven material.

The lower facer may be formed from a triple layer of plastics material. Optionally it has a layer that is permeable to water vapour but not liquid water between two other layers. For example it may be a polyolefin layer between two other layers. Each of the layers may be a polypropylene layer.

Desirably the polypropylene material is a non-woven material.

Optionally the layers may be bonded together using heat or thermobonding.

The use of a non-woven polypropylene material results in the formation of polypropylene fibres. Those fibres are fixed to the facing at one end and free on the other. On one side of one layer of such a non-woven polypropylene material, it is the free end of these fibres which provide the mechanical bonding to the foam. On the opposite side of that layer, the free end of these fibres provide mechanical fixing to an applied finishing material such as a plaster or render.

Where there is more than one layer, it is desirable that there are at least two layers each with respective fibres that are fixed to that layer at one end and free on the other.

This means that for one layer (and a face thereof that faces inwardly in use,) it is the free end of these fibres which provide the mechanical bonding to the foam. On the other layer, (and a face thereof that faces outwardly in use), it is the free end of these fibres that provide mechanical fixing to an applied finishing material such as a plaster or render.

The lower facer may be formed from a plastics material having a density of from about 80 to about 120 grams per m², for example from about 90 to about 110 grams per m², such as from about 95 to about 105 grams per m² e.g. about 100 grams per m².

The amount of adhesive is desirably from about 70 to about 110 grams per m² (of the lower facer) for example 80 to about 100 grams per m², such as from about 85 to about 95 grams per m², e.g. about 90 grams per m². The adhesive helps to exclude air from the fibres before the foam reactants are applied. In this way, there are less voids or bubbles in the foam due to entrapment of that air in the foam. Of course, bubbles of air in the foam body are undesirable as this will increase thermal conductivity. Furthermore, the bubbles may cause issues of structural integrity between the facer and the foam, because unbound parts of the fibres trapped in the foam where bubbles occur are less well mechanically secured (or anchored) than where there are no bubbles in the foam.

Desirably the adhesive may be a two component reactive polyurethane adhesive which is deposited on the lower facing. It may be a foamed adhesive

It is desirable to have even application of the adhesive. For example a rotating dispensing disc may be used to uniformly cover the whole lower facing (on the side on which the foam reactants are to be deposited).

It is desirable that heat is applied while depositing the foam forming reactants over the adhesive material.

A temperature of from about 30 to about 70⁰C, such as from about 35 to about 60⁰C, for example about 40 to about 55°C may be applied, while depositing the foam forming reactants over the adhesive material.

The foam forming reactants may react to form a PIR (polyisocyanurate) foam and the foam board comprises a PIR (polyisocyanurate) foam body. For such foam reactants a temperature of from about 40 to about 65⁰C, such as from about 45 to about 60⁰C, for example about 50 to about 55°C may be applied, while depositing the foam forming reactants.

The foam forming reactants may react to form a polyurethane foam and the foam board comprises a polyurethane foam body. For such foam reactants a temperature of from about 30 to about 60⁰C, such as from about 35 to about 55⁰C, for example about 40 to about 45⁰C is applied, while depositing the foam forming reactants.

Desirably the lower facer has a density of from about 70 to about 120 grams per m² for example 80 to about 110 grams per m², such as from about 95 to about 105 grams per m², e.g. about 100 grams per m².

A process according to the present invention can provide a foam board that has a thermal conductivity of no more than 0.022 W/m.K. All thermal conductivities in relation to the invention are determined by EN 12667:2002 unless otherwise stated.

In a process of the invention the lower facer may be laid down in a u-shape and the foam reactants are then deposited inside the u-shape.

The foam reactants are desirably laid down using a fixed dispensing pipe. This minimises air bubble formation between the facing material and the (core) foam. It also allows for smooth and straight rising of the foam.

An upper facer may be applied over the foam forming reactants thus forming a foam board comprising the foam body with the lower facer and the upper facer attached thereto. The upper facer may be made of the same material, and attached in the same way as the lower facer.

Desirably the upper facer is passed underneath an applied vacuum while being applied. This helps to reduce wrinkles/creases in the upper facer.

Like the lower facer, the upper facer may be a non-woven material and optionally formed from a triple layer of plastics material, optionally with a layer that is permeable to water vapour but not liquid water between two other layers, for example a polyolefin layer between two other layers each of which is a polypropylene layer.

Like the lower facer, the upper facer may be formed from a plastics material having a density of from about 80 to about 120 grams per m², for example from about 90 to about 110 grams per m², such as from about 95 to about 105 grams per m² e.g. about 100 grams per m².

There are a number of advantages to the present invention. The process of the invention achieves good adhesion of the facer to the (foam) core material. This results from the fibres/non-woven structure of the facing which gives good mechanical fixation to the foam core. The process of the invention allows formation of an insulation board where there is a bubble free interface between the (foam) core and the facer. This is achieved by use of the adhesive. It is also possible with the present invention, in particular with use of vacuum, achieve a wrinkle free surface on the upper facer.

Overall, the resultant product may be used externally but still has very good thermal insulation properties. Furthermore a finishing material such as a render or a plaster is very strongly bonded once applied to a foam board of the invention. This is due to that the fact that the external face of the board (usually formed by the lower facer) has a fibres/non-woven structure which gives good mechanical fixation to an applied finishing material such as a plaster or a render. The water vapour permeability of the board is also good due in part to the use of a breathable membrane. A foam board of the invention is also watertight by use of the facing materials and by selection of the foam core material for example a PIR material. This again gives a very good resistance to a freeze/thaw cycle. A foam board of the invention also demonstrates very good ageing characteristics maintaining almost unchanged both mechanical and thermal characteristics of the board for example for at least 10 years.

A facer for use in the process of the invention may include one or more of heat stabilisers, UV stabiliser, colourant, fire retardant. One or more of these may be incorporated as additives when the facer is being formed.

The following was carried out in a continuous line production. A triple layer facer comprising two polypropylene layers with an intermediate polyolefin breathable layer (commercially available from Lider Co. Romania,) was laid down onto a lower conveyor. Both faces of the facer had a fibrous face with partially unbound fibres formed by fibres that are in part bound to the lower facer and are in part unbound, so that the fibrous face faces upwards. A liquid two part polyurethane adhesive material (commercially available from BASF under brand name Elastopor H 1962/10) onto the fibrous face so as to wet the unbound part of fibres and eliminate air from between the unbound part of fibres. An even coating was applied across the entire surface area of the facer using a rotating dispensing disc. Foam reactants which react to form PIR foam commercially available from BASF under brand name Elastopir H 1132/506/0 were dispensed through a fixed pipe dispensing system over the adhesive material. An upper facer (identical to the lower one) was laid over the foam reactants. The foam expanded between the facers. The rising foam and the facers were confined between an upper and lower conveyor. A vacuum of 0.2 bar (20kPa) was applied to the upper facer as it is entering the laydown area. The production area was heated and maintained in the range from about 50 to about 55⁰C. A foam body of a desired shape, i.e. a rectangular foam board is formed from the reactants. The continuous foam board was then cut to a desired length. The foam boards were then passed through a cooling unit for 15 to 25 minutes and then stacked. When fully cured boards were tested and found to have an average thermal conductivity of 0.022 W/m.K as determined using standard procedure EN 12667:2002. The tensile strength required to pull the lower (and upper) facers away from the foam core was tested. It was found that the foam core failed before the facers pulled away from the core.

The words "comprises/comprising" and the words "having/including" when used herein with reference to the present invention are used to specify the presence of stated features, integers, steps or components but do not preclude the presence or addition of one or more other features, integers, steps, components or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

## Claims

1. A process for making a foam board comprising the steps of:
(a) laying down a lower facer of a plastics material, which has a fibrous face with partially unbound fibres formed by fibres that are in part bound to the lower facer and are in part unbound, so that the fibrous face faces upwards;
(b) depositing a liquid adhesive material onto the fibrous face so as to wet the unbound part of fibres and eliminate air from between the partially unbound fibres;
(c) depositing foam forming reactants over the adhesive material that is on the fibrous face; and
(d) forming a foam body of a desired shape from the reactants,
wherein the adhesive material and the unbound part of the fibres are incorporated into the foam body so that the unbound part of the fibres provide mechanical fixation of the lower facer to the foam body thus forming a foam board comprising the foam body with the lower facer attached thereto.

2. A process according to Claim 1 wherein the lower facer has a fibrous face with partially unbound fibres formed by fibres that are in part bound to the lower facer and are in part unbound, so that, in use with an applied finishing material, the fibrous face provides mechanical fixation of the lower facer to an applied finishing material such as a plaster or render; optionally wherein the unbound part of fibres form a fleece.

3. A process according to any preceding claim wherein the lower facer is formed of a polypropylene material with partially unbound polypropylene fibres formed by fibres that are in part bound to the lower facer and are in part unbound on at least one face thereof.

4. A process according to any preceding claim wherein the lower facer comprises at least one layer that is permeable to water vapour but not liquid water.

5. A process according to any preceding claim wherein the lower facer comprises at least one anti-condensation layer.

6. A process according to any preceding claim wherein the lower facer is formed from a triple layer of plastics material, optionally with a layer that is permeable to water vapour but not liquid water between two other layers, for example a polyolefin layer between two other layers each of which is a polypropylene layer.

7. A process according to any preceding claim wherein the lower facer is formed from a plastics material having a density of from 80 to 120 grams per m², for example from 90 to 110 grams per m², such as from 95 to 105 grams per m² e.g. 100 grams per m²; or wherein the amount of adhesive is from 70 to 110 grams per m² (of the lower facer) for example 80 to 100 grams per m², such as from 85 to 95 grams per m², e.g. about 90 grams per m²; optionally wherein the adhesive is a two component reactive polyurethane adhesive.

8. A process according to any preceding claim wherein heat is applied while depositing the foam forming reactants over the adhesive material, optionally wherein a temperature of from 30 to 70°C, such as from 35 to 60°C, for example 40 to 55°C is applied, while depositing the foam forming reactants over the adhesive material.

9. A process according to any preceding claim wherein the foam forming reactants react to form a PIR (polyisocyanurate) foam and the foam board comprises a PIR (polyisocyanurate) foam body; optionally wherein a temperature of from 40 to 65°C, such as from 45 to 60°C, for example 50 to 55°C is applied, while depositing the foam forming reactants.

10. A process according to any of claims 1 to 8 wherein the foam forming reactants react to form a polyurethane foam and the foam board comprises a polyurethane foam body; optionally wherein a temperature of from 30 to 60°C, such as from 35 to 55°C, for example 40 to 45°C is applied, while depositing the foam forming reactants.

11. A process according to any preceding claim wherein the lower facer has a density of from 70 to 120 grams per m² for example 80 to 110 grams per m², such as from 95 to 105 grams per m², e.g. about 100 grams per m².

12. A process according to any preceding claim wherein the foam board has a thermal conductivity of no more than 0.022 W/m.K.

13. A process according to any preceding claim wherein the lower facer is laid down in a u-shape and the foam reactants are deposited inside the u-shape.

14. A process according to any preceding claim wherein an upper facer is applied over the foam forming reactants thus forming a foam board comprising the foam body with the lower facer and the upper facer attached thereto; optionally the upper facer is passed underneath an applied vacuum while being applied.

15. A process according to Claim 13 or Claim 14 wherein the upper facer is formed from a triple layer of plastics material, optionally with a layer that is permeable to water vapour but not liquid water between two other layers, for example a polyolefin layer between two other layers each of which is a polypropylene layer; optionally wherein the upper facer is formed from a plastics material having a density of from 80 to 120 grams per m², for example from 90 to 110 grams per m², such as from 95 to 105 grams per m² e.g. 100 grams per m².

## Patentansprüche

1. Ein Verfahren zur Herstellung einer Schaumstoffplatte, das folgende Schritte aufweist:
(a) Aus- bzw. Unterlegen einer unteren Deckschicht aus einem Kunststoffmaterial, das eine Faserfläche mit teilweise ungebundenen Fasern aufweist, die durch Fasern gebildet werden, die teilweise an die untere Deckschicht gebunden und teilweise ungebunden sind, so dass die Faserfläche nach oben weist;
(b) Aufbringen eines flüssigen Klebstoffmaterials auf die Faserfläche, um den ungebundenen Teil der Fasern zu benetzen und um Luft zwischen den teilweise ungebundenen Fasern zu entfernen;
(c) Aufbringen von schaumbildenden Reaktanten auf bzw. über das Klebstoffmaterial, das sich auf der Faserfläche befindet; und
(d) Bilden eines Schaumstoffkörpers mit einer gewünschten Form aus den Reaktanten, wobei das Klebstoffmaterial und der ungebundene Teil der Fasern in den Schaumstoffkörper eingearbeitet werden bzw. sind, so dass der ungebundene Teil der Fasern eine mechanische Fixierung der unteren Deckschicht an dem Schaumstoffkörper bereitstellt, wodurch eine Schaumstoffplatte gebildet wird, die den Schaumstoffkörper mit der daran befestigten unteren Deckschicht aufweist.

2. Ein Verfahren nach Anspruch 1, wobei die untere Deckschicht eine Faserfläche mit teilweise ungebundenen Fasern aufweist, die durch Fasern gebildet werden, die teilweise an die untere Deckschicht gebunden und teilweise ungebunden sind, so dass, bei einer Verwendung mit einem aufgetragenen Veredler- bzw. Oberflächenschlussbearbeitungsmaterial, die Faserfläche für eine mechanische Fixierung der unteren Deckschicht an einem aufgetragenen Veredler- bzw. Oberflächenschlussbearbeitungsmaterial, wie z. B. einem Gips oder Putz, sorgt;
wobei optional der ungebundene Teil der Fasern ein Vlies bildet.

3. Ein Verfahren nach einem der vorhergehenden Ansprüche, wobei die untere Deckschicht aus einem Polypropylenmaterial mit teilweise ungebundenen Polypropylenfasern gebildet wird bzw. ist, die durch Fasern gebildet werden bzw. sind, die teilweise an die untere Deckschicht gebunden sind und die teilweise auf mindestens einer Seite davon ungebunden sind.

4. Ein Verfahren nach einem der vorhergehenden Ansprüche, wobei die untere Deckschicht mindestens eine Schicht aufweist, die für Wasserdampf, aber nicht für flüssiges Wasser durchlässig ist.

5. Ein Verfahren nach einem der vorhergehenden Ansprüche, wobei die untere Deckschicht mindestens eine Antikondensationsschicht aufweist.

6. Ein Verfahren nach einem der vorhergehenden Ansprüche, wobei die untere Deckschicht aus einer Dreifachschicht aus Kunststoffmaterial gebildet wird, optional mit einer Schicht, die für Wasserdampf, aber nicht für flüssiges Wasser zwischen zwei anderen Schichten durchlässig ist, beispielsweise einer Polyolefinschicht zwischen zwei anderen Schichten, von denen jede eine Polypropylenschicht ist.

7. Ein Verfahren nach einem der vorhergehenden Ansprüche, wobei die untere Deckschicht aus einem Kunststoffmaterial mit einer Dichte von 80 bis 120 Gramm pro m² gebildet wird, beispielsweise von 90 bis 110 Gramm pro m², wie 95 bis 105 Gramm pro m², beispielsweise 100 Gramm pro m²; oder wobei die Klebstoffmenge 70 bis 110 g pro m² (der unteren Deckschicht), beispielsweise 80 bis 100 g pro m², wie 85 bis 95 g pro m², beispielsweise etwa 90 g pro m², beträgt;
wobei der Klebstoff optional ein reaktiver Zweikomponenten-Polyurethanklebstoff ist.

8. Ein Verfahren nach einem der vorangehenden Ansprüche, wobei Wärme zugeführt wird, während die schaumbildenden Reaktanten auf bzw. über das Klebstoffmaterial aufgebracht werden, wobei optional eine Temperatur 30 bis 70°C, wie 35 bis 60°C, beispielsweise 40 bis 55°C, angelegt wird, während die schaumbildenden Reaktanten auf das bzw. dem Klebstoffmaterial aufgebracht werden.

9. Ein Verfahren nach einem der vorhergehenden Ansprüche, wobei die schaumbildenden Reaktanten reagieren, um einen PIR- bzw. Polyisocyanurat-Schaum zu bilden, und wobei die Schaumstoffplatte einen PIR- bzw. Polyisocyanurat-Schaumstoffkörper aufweist;
wobei optional eine Temperatur von 40 bis 65°C, wie 45 bis 60°C, beispielsweise 50 bis 55°C, angelegt wird, während die schaumbildenden Reaktanten aufgebracht werden.

10. Ein Verfahren nach einem der Ansprüche 1 bis 8, wobei die schaumbildenden Reaktanten reagieren, um einen Polyurethanschaum zu bilden, und wobei die Schaumstoffplatte einen Polyurethan-Schaumstoffkörper aufweist;
wobei optional eine Temperatur von 30 bis 60°C, wie 35 bis 55°C, beispielsweise etwa 40 bis 45°C, angelegt wird, während die schaumbildenden Reaktanten aufgebracht werden.

11. Ein Verfahren nach einem der vorhergehenden Ansprüche, wobei die untere Deckschicht eine Dichte von 70 bis 120 Gramm pro m², beispielsweise 80 bis 110 Gramm pro m², wie 95 bis 105 Gramm pro m², beispielsweise 100 Gramm pro m², aufweist.

12. Ein Verfahren nach einem der vorhergehenden Ansprüche, wobei die Schaumstoffplatte eine Wärmeleitfähigkeit von nicht mehr als 0,022 W/mK aufweist.

13. Ein Verfahren nach einem der vorhergehenden Ansprüche, wobei die untere Deckschicht u-förmig ausgelegt wird und wobei die Schaumreaktanten innerhalb der u-Form aufgebracht werden.

14. Ein Verfahren nach einem der vorhergehenden Ansprüche, wobei eine obere Deckschicht über den schaumbildenden Reaktanten aufgebracht wird, wodurch eine Schaumstoffplatte gebildet wird, die den Schaumstoffkörper mit der unteren Deckschicht und der daran befestigten oberen Deckschicht aufweist;
wobei optional die obere Deckschicht während des Aufbringens unter einem angelegten Vakuum geführt wird.

15. Ein Verfahren nach Anspruch 13 oder Anspruch 14, wobei die obere Deckschicht aus einer Dreifachschicht aus Kunststoffmaterial gebildet wird, optional mit einer Schicht, die für Wasserdampf, aber nicht für flüssiges Wasser durchlässig ist zwischen zwei anderen Schichten, beispielsweise einer Polyolefinschicht zwischen zwei anderen Schichten, die jeweils eine Polypropylenschicht sind;
wobei optional die obere Deckschicht aus einem Kunststoffmaterial mit einer Dichte von 80 bis 120 Gramm pro m², beispielsweise 90 bis 110 Gramm pro m², wie 95 bis 105 Gramm pro m², beispielsweise 100 Gramm pro m², gebildet wird bzw. ist.

## Revendications

1. Procédé de fabrication d'une plaque en mousse comprenant les étapes suivantes :
(a) coucher un revêtement inférieur d'une matière plastique, qui a une face fibreuse avec des fibres partiellement non liées formées par des fibres qui sont en partie liées au revêtement inférieur et sont en partie non liées, de sorte que la face fibreuse fait face vers le haut ;
(b) déposer un matériau adhésif liquide sur la face fibreuse de manière à mouiller la partie non liée des fibres et à éliminer de l'air entre les fibres partiellement non liées ;
(c) déposer des réactifs de formation de mousse sur le matériau adhésif qui se trouve sur la face fibreuse ; et
(d) former un corps en mousse d'une forme souhaitée à partir des réactifs,
dans lequel le matériau adhésif et la partie non liée des fibres sont incorporés dans le corps en mousse de sorte que la partie non liée des fibres assure une fixation mécanique du revêtement inférieur au corps en mousse en formant ainsi une plaque en mousse comprenant le corps en mousse avec le revêtement inférieur attaché à celui-ci.

2. Procédé selon la revendication 1, dans lequel le revêtement inférieur comprend une face fibreuse avec des fibres partiellement non liées formées par des fibres qui sont en partie liées au revêtement inférieur et sont en partie non liées, de sorte que, lors de l'utilisation avec un matériau de finition appliqué, la face fibreuse assure une fixation mécanique du revêtement inférieur à un matériau de finition appliqué tel qu'un plâtre ou un enduit ; facultativement dans lequel la partie non liée des fibres forme un molleton.

3. Procédé selon l'une quelconque des revendications précédentes dans lequel le revêtement inférieur est formé d'un matériau de polypropylène avec des fibres de polypropylène partiellement non liées formées de fibres qui sont en partie liées au revêtement inférieur et en partie non liées sur au moins une face de celui-ci.

4. Procédé selon l'une quelconque des revendications précédentes dans lequel le revêtement inférieur comprend au moins une couche qui est perméable à la vapeur d'eau, mais pas à l'eau liquide.

5. Procédé selon l'une quelconque des revendications précédentes dans lequel le revêtement inférieur comprend au moins une couche anti-condensation.

6. Procédé selon l'une quelconque des revendications précédentes dans lequel le revêtement inférieur est formé d'une triple couche de matière plastique, facultativement avec une couche qui est perméable à la vapeur d'eau, mais pas à l'eau liquide entre deux autres couches, par exemple une couche de polyoléfine entre deux autres couches, chacune d'elles étant une couche de polypropylène.

7. Procédé selon l'une quelconque des revendications précédentes dans lequel le revêtement inférieur est formé d'une matière plastique ayant une densité de 80 à 120 grammes par m², par exemple de 90 à 110 grammes par m², telle que de 95 à 105 grammes par m², par exemple de 100 grammes par m² ; ou
dans lequel la quantité d'adhésif est de 70 à 110 grammes par m² (du revêtement inférieur), par exemple de 80 à 100 grammes par m², comme de 85 à 95 grammes par m², par exemple d'environ 90 grammes par m² ; facultativement dans lequel l'adhésif est un adhésif polyuréthane réactif à deux composants.

8. Procédé selon l'une quelconque des revendications précédentes dans lequel de la chaleur est appliquée tout en déposant les réactifs de formation de mousse sur le matériau adhésif, facultativement dans lequel une température de 30 à 70°C, telle que de 35 à 60°C, par exemple de 40 à 55°C est appliquée, tout en déposant les réactifs de formation de mousse sur le matériau adhésif.

9. Procédé selon l'une quelconque des revendications précédentes, dans lequel les réactifs de formation de mousse réagissent pour former une mousse PIR (polyisocyanurate) et la plaque en mousse comprend un corps en mousse PIR (polyisocyanurate) ; facultativement dans lequel une température de 40 à 65°C, telle que de 45 à 60°C, par exemple de 50 à 55°C est appliquée, tout en déposant les réactifs de formation de mousse.

10. Procédé selon l'une quelconque des revendications 1 à 8, dans lequel les réactifs de formation de mousse réagissent pour former une mousse polyuréthanne et la plaque en mousse comprend un corps en mousse polyuréthanne ; facultativement dans lequel une température de 30 à 60°C, telle que de 35 à 55°C, par exemple de 40 à 45°C est appliquée, tout en déposant les réactifs de formation de mousse.

11. Procédé selon l'une quelconque des revendications précédentes dans lequel le revêtement inférieur présente une densité de 70 à 120 grammes par m², par exemple de 80 à 110 grammes par m², comme de 95 à 105 grammes par m², par exemple d'environ 100 grammes par m².

12. Procédé selon l'une quelconque des revendications précédentes dans lequel la plaque en mousse a une conductivité thermique non supérieure à 0,022 W/m.K.

13. Procédé selon l'une quelconque des revendications précédentes dans lequel le revêtement inférieur est couché selon une forme en u et les réactifs de formation de mousse sont déposés à l'intérieur de la forme en u.

14. Procédé selon l'une quelconque des revendications précédentes dans lequel un revêtement supérieur est appliqué sur les réactifs de formation de mousse formant ainsi un plaque en mousse comprenant le corps en mousse avec le revêtement inférieur et le revêtement supérieur attachés à celui-ci ; facultativement
le revêtement supérieur est passé au-dessous d'un vide appliqué tout en étant appliqué.

15. Procédé selon la revendication 13 ou la revendication 14 dans lequel le revêtement supérieur est formé d'une triple couche de matière plastique, facultativement avec une couche qui est perméable à la vapeur d'eau, mais pas à l'eau liquide entre deux autres couches, par exemple une couche de polyoléfine entre deux autres couches, chacune d'elles étant une couche de polypropylène ; facultativement dans lequel le revêtement supérieur est formé d'une matière plastique ayant une densité de 80 à 120 grammes par m², par exemple de 90 à 110 grammes par m², comme de 95 à 105 grammes par m², par exemple de 100 grammes par m².
